# EUROPEAN PATENT SPECIFICATION

(11) **EP 3 493 572 B1**
(45) Date of publication and mention of the grant of the patent: **04.11.2020**
(21) Application number: 17844876.7
(22) Date of filing: 13.04.2017
(51) Int. Cl.: H04W 12/00, H04W 12/10, H04W 12/12

(54) **SIGNALING ATTACK PREVENTION METHOD AND DEVICE**
SIGNALISIERUNGSANGRIFFSVERHINDERUNGSVERFAHREN UND -VORRICHTUNG
PROCÉDÉ ET DISPOSITIF DE PRÉVENTION D'ATTAQUE DE SIGNALISATION

(30) Priority: 31.08.2016 CN 201610794941
(43) Date of publication of application: 05.06.2019
(73) Proprietor: Huawei Technologies Co., Ltd., Longgang District Shenzhen, Guangdong 518129 (CN)
(72) Inventor: HE, Chengdong, Shenzhen Guangdong 518129 (CN)
(74) Representative: Goddar, Heinz J.
(86) International application number: PCT/CN2017/080384
(87) International publication number: WO 2018/040568

(56) References cited:
- WO-A2-2014/160935
- CN-A- 101 163 264
- CN-A- 101 505 478
- CN-A- 102 638 442
- CN-A- 104 427 483
- "3rd Generation Partnership Project; Technical Specification Group Core Network and Terminals; 3GPP Evolved Packet System (EPS); Evolved General Packet Radio Service (GPRS) Tunnelling Protocol for Control plane (GTPv2-C); Stage 3 (Release 8)", 3GPP STANDARD; 3GPP TS 29.274, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V8.0.0, 1 December 2008 (2008-12-01), pages 1-111, XP050372751,
- Bhanu Teja E Kotte: "Analysis and Experimental Verification of Diameter Attacks in Long Term Evolution Networks", , 1 December 2008 (2008-12-01), XP055434736, Stockholm Sweden Retrieved from the Internet: URL:http://www.diva-portal.org/smash/get/d iva2:951619/FULLTEXT01.pdf [retrieved on 2017-12-13]

## Description

### TECHNICAL FIELD

The present invention relates to the communications field, and specifically, to a signaling attack prevention method and apparatus.

### BACKGROUND

Both a serving gateway (Serving GateWay, SGW for short) and a public data network gateway (Public Data Network GateWay, PGW for short) are important network elements in a mobile communications network. The SGW is responsible for a data plane function such as user data forwarding. The PGW provides functions such as user session management and bearer control, data forwarding, Internet Protocol (Internet Protocol, IP for short) address assignment, and non-3rd Generation Partnership Project (3rd Generation Partnership Project, 3GPP for short) user access.

In a network in the 4th generation mobile communication technology (The 4th Generation mobile communication technology, 4G for short), the SGW and the PGW communicate with each other based on a fifth data interface S5 or an eighth data interface S8 defined in the GTP-C protocol in the general packet radio service Tunneling Protocol (General Packet Radio Service Tunnelling Protocol, GTP for short). When the SGW and the PGW belong to a same operator, the SGW and the PGW communicate with each other by using the S5 interface, and in this case, the communication is secure. However, when the SGW and the PGW belong to different operators, the SGW and the PGW communicate with each other by using the S8 interface, and in this case, a hacker may attack the SGW by using the PGW, resulting in a communication security risk.

3GPP TS 29.274 V8.0.0 (2008-12) "3rd Generation Partnership Project; Technical Specification Group Core Network and Terminals; 3GPP Evolved Packet System (EPS); Evolved General Packet Radio Service (GPRS) Tunnelling Protocol for Control plane (GTPv2-C); Stage 3 (Release 8)" specifies the stage 3 of the control plane of the GPRS Tunnelling Protocol, Version 2 for Evolved Packet System interfaces (GTPv2-C). Bhanu Teja E Kotte: "Analysis and Experimental Verification of Diameter Attacks in Long Term Evolution Networks", Degree Project in Electrical Engineering, Second Cycle, 30 Credits Stockholm, Sweden, 2016 discloses attacks on roaming interconnection, experiments and contermeausres.

### SUMMARY

The present invention provide a signaling attack prevention method of claim 1 and apparatus of claim 8, to prevent a GTP-C signaling attack and improve communication security. Possible implementation manners are disclosed in the dependent claims.

According to a first aspect, an embodiment of the present invention provides a signaling attack prevention method. The method includes: receiving, by an SGW or an edge node, a general packet radio service (GPRS) Tunneling Protocol (GTP-C) message sent by a public data network gateway (PGW); determining, by the SGW or the edge node, whether the GTP-C message is received from an S8 interface; when the GTP-C message is received from the S8 interface, determining, by the SGW or the edge node, whether a characteristic parameter of the GTP-C message is valid; and if the characteristic parameter of the GTP-C message is invalid, discarding, by the SGW or the edge node, the GTP-C message or returning, to the PGW, a GTP-C response message carrying an error code cause value. The characteristic parameter includes a message type of the GTP-C message, and the determining, by the SGW or the edge node, whether a characteristic parameter of the GTP-C message is valid includes: determining, by the SGW or the edge node, whether the message type of the GTP-C message is an S11 interface message type; and when the message type of the GTP-C message is the S11 interface message type, determining, by the SGW or the edge node, that the message type of the GTP-C message is invalid.

In the solution provided in this embodiment of the present invention, validity of each parameter in the GTP-C message is determined, and when each characteristic parameter is invalid, the GTP-C message is discarded or the GTP-C response message carrying the error code cause value is returned to the PGW, so that a hacker can be effectively prevented from attacking the SGW by using each attack path, and communication security is improved. By means of further determining validity of the message type of the GTP-C message, the hacker can be further prevented from performing signaling attack on the SGW by using the GTP-C message, and communication security is improved.

In a possible design, the determining, by the SGW or the edge node, whether the GTP-C message is received from an S8 interface includes: determining, by the SGW or the edge node, whether the source IP address and an IP address of the serving gateway (SGW) or the edge node that receives the GTP-C message belong to a same network segment; and when the source IP address and the IP address of the SGW or the edge node that receives the GTP-C message do not belong to a same network segment, determining, by the SGW or the edge node, that an interface for receiving the GTP-C message is the S8 interface.

In a possible design, the determining, by the SGW or the edge node, whether the GTP-C message is received from an S8 interface includes: determining, by the SGW or the edge node, whether the source IP address belongs to an IP address set authorized by an operator to which the SGW or the edge node belongs; and when the source IP address does not belong to the IP address set authorized by the operator to which the SGW or the edge node belongs, determining, by the SGW or the edge node, that an interface for receiving the GTP-C message is the S8 interface.

In the solution provided in this embodiment of the present invention, by means of determining whether the GTP-C message is received from the S8 interface, attack prevention processing may be performed only on the GTP-C message received by the SGW or the edge node from the S8 interface, so that attack prevention efficiency is improved.

In a possible design, the characteristic parameter includes a source Internet Protocol (IP) address in the GTP-C message, and the determining, by the SGW or the edge node, whether a characteristic parameter of the GTP-C message is valid includes: determining, by the SGW or the edge node, whether the source IP address belongs to a preset IP address set; and when the source IP address does not belong to the preset IP address set, determining, by the SGW or the edge node, that the source IP address in the GTP-C message is invalid. By means of presetting a valid IP address set and determining whether the source IP address in the GTP-C message is in the IP address set, the hacker can be further prevented from launching a signaling attack on the SGW by forging the IP address in the GTP-C message, and communication security is improved.

In a possible design, the characteristic parameter includes the source Internet Protocol (IP) address in the GTP-C message, and the determining, by the SGW or the edge node, whether a characteristic parameter of the GTP-C message is valid includes: sending, by the SGW or the edge node, the source IP address to a home subscriber server (HSS) and/or a mobility management entity (MME), so that the MME and/or the HSS determine/determines whether the source IP address belongs to the preset IP address set; receiving, by the SGW or the edge node, a home operator determining result returned by the MME and/or the HSS; and when the home operator determining result is that the source IP address does not belong to the preset IP address set, determining that the source IP address in the GTP-C message is invalid. By means of presetting the valid IP address set in the HSS or the MME and determining whether the source IP address in the GTP-C message is in the IP address set, the hacker can be further prevented from launching a signaling attack on the SGW by forging the IP address in the GTP-C message, and communication security is improved.

In a possible design, the characteristic parameter includes the source IP address in the GTP-C message, and the determining, by the SGW or the edge node, whether a characteristic parameter of the GTP-C message is valid further includes: determining, by the SGW or the edge node, whether the source IP address is consistent with a source IP address in a GTP-C message received by the SGW or the edge node before the GTP-C message is received; and when the source IP address is inconsistent with the source IP address in the GTP-C message received by the SGW or the edge node before the GTP-C message is received, determining, by the SGW or the edge node, that the source IP address in the GTP-C message is invalid. By means of determining consistency of the source IP address in the GTP-C message, the hacker can be further prevented from launching a signaling attack on the SGW by forging the IP address in the GTP-C message, and communication security is improved.

In a possible design, the characteristic parameter includes an international mobile subscriber identity (IMSI) of a user, and the determining, by the SGW or the edge node, whether a characteristic parameter of the GTP-C message is valid includes: determining, by the SGW or the edge node, whether the IMSI is an IMSI authorized by an operator to which the PGW belongs; and when the IMSI is not the IMSI authorized by the operator to which the PGW belongs, determining, by the SGW or the edge node, that the IMSI in the GTP-C message is invalid. Because the IMSI is an identity of a terminal user that sends the GTP-C message by using the PGW, that is, a message resource that sends the GTP-C message, whether the GTP-C is sent by a valid terminal user can be accurately determined by using the IMSI in the GTP-C message to determine validity of the GTP-C message, so as to prevent the hacker from launching a malicious attack on the SGW by using GTP-C signaling, and improve communication security.

In an example, the IMSI is carried in the GTP-C message or is obtained by using a tunnel endpoint identifier TEID carried in the GTP-C message. Because the GTP-C message may carry the IMSI or may carry the TEID, when the GTP-C message carries the TEID, the IMSI may be found by using the TEID.

According to a second aspect, an embodiment of the present invention provides a signaling attack prevention apparatus. The signaling attack prevention apparatus has a function of implementing the first aspect, and the function may be implemented by using hardware, or may be implemented by using hardware to execute corresponding software. The hardware or the software includes one or more modules corresponding to the foregoing function.

In a possible design, the signaling attack prevention apparatus may include an SGW.

In a possible design, the signaling attack prevention apparatus may include an edge node.

According to a third aspect, an embodiment of the present invention provides a signaling attack prevention apparatus. The signaling attack prevention apparatus includes a processor, a receiver, and a transmitter. The processor is configured to support a terminal in executing a corresponding function in the foregoing method. The receiver and the transmitter are configured to support the signaling attack prevention apparatus in communicating with a PGW. Further, a relay device may further include a memory, the memory is configured to couple with the processor, and the memory stores a program instruction and data that are necessary to the terminal.

According to a fourth aspect, an embodiment of the present invention provides a computer storage medium, configured to store a computer software instruction used by the signaling attack prevention apparatus in the second aspect, and the computer storage medium includes a program designed for executing the foregoing aspect.

In comparison with the prior art, in the solutions provided in the embodiments of the present invention, after the SGW or the edge node receives the GTP-C message sent by the PGW, whether the characteristic parameter carried in the GTP-C message is valid is determined when the GTP-C message is received from the S8 interface, and the GTP-C message is discarded or the GTP-C response message carrying the error code cause value is returned to the PGW when the characteristic parameter is invalid, so that a hacker can be effectively prevented from attacking the SGW by using each attack path, and communication security is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a diagram of a network architecture used for communication between an SGW and a PGW according to an embodiment of the present invention;
FIG. 2 is a schematic diagram of a signaling attack according to an embodiment of the present invention;
FIG. 3 is a diagram of an S8 interface protocol stack according to an embodiment of the present invention;
FIG. 4 is a schematic flowchart of a signaling attack prevention method according to an embodiment of the present invention;
FIG. 5 is a schematic flowchart of another signaling attack prevention method according to an embodiment of the present invention;
FIG. 6 is a schematic structural diagram of a signaling attack prevention apparatus according to an embodiment of the present invention; and
FIG. 7 is a schematic structural diagram of another signaling attack prevention apparatus according to an embodiment of the present invention.

### DESCRIPTION OF EMBODIMENTS

Embodiments of the present invention provide a signaling attack prevention method and apparatus, to prevent a GTP-C signaling attack and improve communication security.

To make persons skilled in the art better understand the technical solutions in the present invention, the following clearly and completely describes the technical solutions in the embodiments of the present invention with reference to the accompanying drawings in the embodiments of the present invention. Apparently, the described embodiments are merely some of rather than all of the embodiments of the present invention. All other embodiments obtained by persons of ordinary skill in the art based on the embodiments of the present invention without creative efforts shall fall within the protection scope of the present invention.

In the specification, claims, and accompanying drawings of the present invention, the terms "first", "second", "third", and so on are intended to distinguish between different objects but do not indicate a particular order. In addition, the terms "including" or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

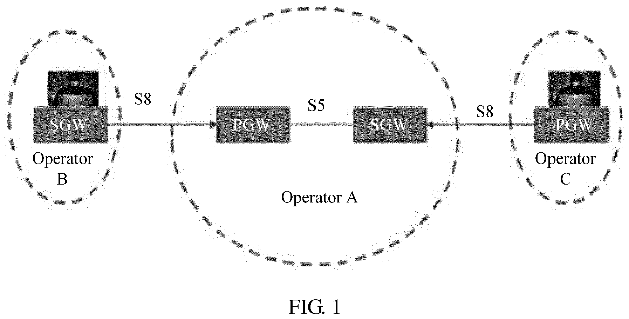

Referring to FIG. 1 first, FIG. 1 is a diagram of a network architecture used for communication between an SGW and a PGW according to an embodiment of the present invention. As shown in FIG. 1, when an SGW and a PGW belong to a same operator, an interface between the SGW and the PGW is referred to as an S5 interface. When the SGW and the PGW belong to different operators, an interface between the SGW and the PGW is referred to as an S8 interface.

In this embodiment of the present invention, if the SGW and the PGW communicate with each other by using the S8 interface, the following conditions need to be met: 1. An operator to which the SGW belongs and an operator to which the PGW belongs need to sign a roaming agreement. 2. An international mobile subscriber identity (International Mobile Subscriber Identification Number, IMSI for short) in a message sent by the SGW to the PGW needs to belong to the operator to which the PGW belongs, and the user has a roaming access permission in a network of the operator to which the SGW belongs.

When the SGW and the PGW belong to different operators, in this case, the SGW and the PGW belong to different security domains. Therefore, a peer network element may be attacked by using the S8 interface.

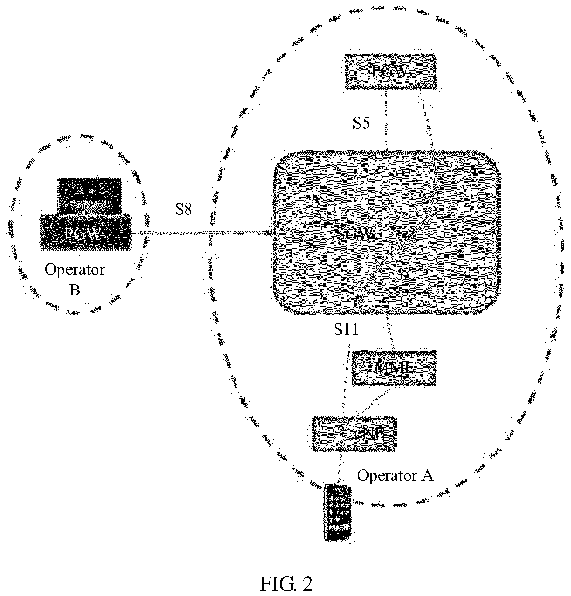

Referring to FIG. 2, FIG. 2 is a schematic diagram of a signaling attack according to an embodiment of the present invention. In a network architecture shown in FIG. 2, a PGW of an operator B may attack an SGW of an operator A by using an S8 interface as described below.
1. An attack path 1: A hacker uses the PGW of the operator B to send a create bearer request message to the SGW of the operator A by using the S8 interface, an IMSI parameter is an IMSI of a terminal attached to the operator B, and the SGW returns a response message to indicate that bearer creation succeeds.
   Consequently, a security risk may be caused: An attacker may repeatedly perform the foregoing attack, until a maximum dedicated bearer quantity of a terminal user is reached. In this case, when the terminal user executes a normal dedicated bearer creation procedure later, because the maximum dedicated bearer quantity is reached, the normal dedicated bearer creation procedure fails, and the user cannot normally use a network service.
2. An attack path 2: A hacker uses the PGW of the operator B to send a delete session request message to the SGW of the operator A by using the S8 interface, an IMSI parameter is an IMSI of a terminal attached to the operator B, and the SGW returns a response message to indicate that dedicated session deletion succeeds. Consequently, a security risk 2 may be caused: An attached user is forced to exit a network.
3. An attack path 3: A hacker uses the PGW of the operator B to send a delete bearer request message to the SGW of the operator A by using the S8 interface, an IMSI parameter is an IMSI of a user terminal attached to the operator B, and the SGW returns a response message to indicate that dedicated bearer deletion succeeds. Consequently, a security risk 3 may be caused: Because the dedicated bearer is deleted, a user cannot normally use a network service corresponding to the dedicated bearer.

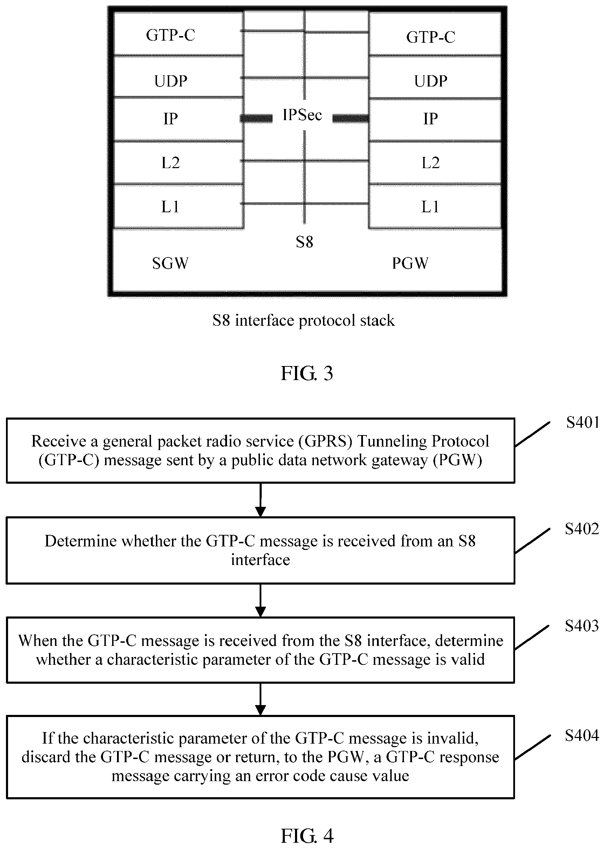

In this embodiment of the present invention, to ensure signaling security on the S8 interface, the Internet Protocol Security Internet Protocol address (Internet Protocol Address, IP address for short) Sec is deployed on the S8 interface, to protect GTP-C signaling security on the S8 interface, for example, identity authentication between the SGW and the PGW, and integrity and confidentiality of data above an IP address layer. Referring to FIG. 3, FIG. 3 is a diagram of an S8 interface protocol stack according to an embodiment of the present invention. However, because all the foregoing three attacks belong to attacks in a GTP-C signaling plane above the IP address layer, even if the identity authentication between the PGW and the SGW succeeds, and the integrity and the confidentiality of the data above the IP address layer are ensured, the attacker may still launch an attack by sending normal GTP-C signaling. Therefore, a conventional IP address Sec mechanism cannot prevent such an attack, and protection for an application plane (such as a GTP-C plane) above the IP address layer needs to be considered.

Referring to FIG. 4, FIG. 4 is a schematic flowchart of an embodiment of a signaling attack prevention method according to an embodiment of the present invention. As shown in FIG. 4, the method may include the following steps.

S401. Receive a general packet radio service (GPRS) Tunneling Protocol (GTP-C) message sent by a public data network gateway (PGW).

In this embodiment of the present invention, the GTP-C message sent by the PGW may be received by an SGW, or the GTP-C message sent by the PGW may be received by an edge node (GTP-C aware).

Optionally, the edge node may be a firewall that is deployed at a border of an operator network and that is aware of the GTP-C Protocol.

Specifically, in this embodiment of the present invention, the GTP-C message may be a create bearer request message, a delete session request message, a delete bearer request message, or the like.

Optionally, the GTP-C message may include at least one of the following items:
a source Internet Protocol (IP) address in the GTP-C message, an international mobile subscriber identity (IMSI) of a user, or a message type of the GTP-C message.

S402. Determine whether the GTP-C message is received from an S8 interface.

In this embodiment of the present invention, when attacking an SGW of an operator A by using a PGW of an operator B, a hacker sends a GTP-C attack message by using the S8 interface. Therefore, to prevent the foregoing attacks, only validity of the GTP-C message received from the S8 interface needs to be determined, and security of a message received from an S5 interface or another security interface does not need to be determined.

Optionally, the determining whether the GTP-C message is received from an S8 interface includes:
determining whether the source IP address in the GTP-C message and an IP address of the serving gateway (SGW) or the edge node that receives the GTP-C message belong to a same network segment; and
when the source IP address and the IP address of the SGW or the edge node that receives the GTP-C message do not belong to a same network segment, determining that an interface for receiving the GTP-C message is the S8 interface.

Optionally, the determining whether the GTP-C message is received from an S8 interface includes:
determining whether the source IP address in the GTP-C message belongs to an IP address set authorized by an operator to which the SGW or the edge node belongs; and
when the source IP address does not belong to the IP address set authorized by the operator to which the SGW or the edge node belongs, determining that an interface for receiving the GTP-C message is the S8 interface.

Specifically, the IP address set may be stored in the SGW or the edge node.

For example, in an example of the present invention, if the SGW belongs to the operator B, the IP address set is a set of all IP addresses authorized and supported by the operator B.

Specifically, the IP address set may be all independent IP addresses such as an IP address 192.168.6.28 and an IP address 192.168.6.78; or may be an IP address segment, for example, 192.168.6.0 is used to indicate an IP address segment from 192.168.6.0 to 192.168.6.255.

It may be understood that, by means of determining whether the GTP-C message is received from the S8 interface, attack prevention processing may be performed only on the GTP-C received by the SGW or the edge node from the S8 interface, so that attack prevention efficiency is improved.

S403. When the GTP-C message is received from the S8 interface, determine whether a characteristic parameter of the GTP-C message is valid.

S404. If the characteristic parameter of the GTP-C message is invalid, discard the GTP-C message or return, to the PGW, a GTP-C response message carrying an error code cause value.

The error code cause value is a value used to reflect an invalidity type of the characteristic parameter of the GTP-C message. For example, when an IMSI parameter carried in the GTP-C message is invalid, an error code cause value is carried in the GTP-C response message to indicate that the IMSI parameter is invalid; or when a source IP parameter in the GTP-C message is invalid, another error code cause value may be carried in the GTP-C response message to indicate that the source IP parameter is invalid.

Optionally, if the characteristic parameter of the GTP-C message is valid, in this case, it indicates that the GTP-C message is valid. Therefore, in this case, normal service processing may be continued.

It can be learned that, in the solution in this embodiment, after the SGW or the edge node receives the GTP-C message sent by the PGW, whether the characteristic parameter carried in the GTP-C message is valid is determined when the GTP-C message is received from the S8 interface, and the GTP-C message is discarded or the GTP-C response message carrying the error code cause value is returned to the PGW when the characteristic parameter is invalid, so that a hacker can be effectively prevented from attacking the SGW by using each attack path, and communication security is improved.

Optionally, in an embodiment of the present invention, the characteristic parameter includes the message type of the GTP-C message.

The determining whether a characteristic parameter of the GTP-C message is valid includes:
determining whether the message type of the GTP-C message is an S11 interface message type; and
when the message type of the GTP-C message is the S11 interface message type, determining that the message type of the GTP-C message is invalid.

The message type is a type of the received GTP-C message. In this embodiment of the present invention, the message type of the GTP-C message may be a message type such as a create/delete session request (IMSI, ...) or a create/delete bearer request (teid, ...). The S11 interface message type is a message type of a GTP-C message received by the SGW or the edge node by using an S11 interface when the SGW and the PGW normally communicate with each other.

For example, in this embodiment of the present invention, when the SGW and the PGW normally communicate with each other, an S8 interface message such as a create/delete bearer request (teid, ...) is received by using an S8 interface, and an S11 interface message such as a create/delete session request (IMSI, ...) is received by using an S11 interface. In this case, a message type of the S11 interface message such as the create/delete session request (IMSI, ...) received by using the S11 interface may be defined as an S11 interface message type. When the S11 interface message such as the create/delete session request (IMSI, ...) is received by using the S8 interface, because this type of message should be received by using the S11 interface in normal communication, in this case, it may be determined that the message type of the GTP-C message is invalid.

Specifically, because a hacker may simulate another network element (such as a mobility management entity MME) on the S8 interface to send a GTP-C message of the S11 interface type to attack the SGW, to ensure communication security, in this case, the message is discarded, or further, a GTP-C response message carrying an error code may be sent to the PGW.

Optionally, when the GTP-C message type is not the S11 interface message type (that is, the GTP-C message type is an S5/S8 interface message type), in this case, it indicates that the message type of the GTP-C message is valid, and normal service processing may be continued.

It may be understood that, validity of the GTP-C message may be further determined by determining whether the message type is the S11 interface message type.

Optionally, in some embodiments of the present invention, the characteristic parameter includes the source Internet Protocol (IP) address in the GTP-C message.

The determining whether a characteristic parameter of the GTP-C message is valid includes:
determining whether the source IP address belongs to a preset IP address set; and
when the IP address does not belong to the preset IP address set, determining that the source IP address in the GTP-C message is invalid.

Optionally, when the IP address belongs to the preset IP address set, it is determined that the source IP address in the GTP-C message is valid.

The preset IP address set is an IP address set authorized by a roaming operator permitted by the operator to which the SGW belongs.

Specifically, the preset IP address set may be pre-configured in the SGW or the edge node.

Further, specifically, a list of roaming operators (peer PGW IP addresses or peer public land mobile network IDs (Public Land Mobile Network ID, PLMN ID for short)) permitted by the operator to which the SGW belongs may be configured in the SGW or the edge node. Then, whether the source IP address is in the list is determined.

Specifically, the IP address set may be all independent IP addresses such as an IP address 192.168.6.28 and an IP address 192.168.6.78; or may be an IP address segment, for example, 192.168.6.0 is used to indicate an IP address segment from 192.168.6.0 to 192.168.6.255.

Optionally, in some other embodiments of the present invention, the characteristic parameter includes the source Internet Protocol (IP) address in the GTP-C message.

The determining whether a characteristic parameter of the GTP-C message is valid includes:
sending the source IP address to a home subscriber server (Home Subscriber Server, HSS for short) and/or a mobility management entity (Mobility Management Entity, MME for short), so that the MME and/or the HSS determine/determines whether the source IP address belongs to the preset IP address set;
receiving a home operator determining result returned by the MME and/or the HSS; and
when the home operator determining result is that the source IP address does not belong to the preset IP address set, determining that the source IP address in the GTP-C message is invalid.

Optionally, when the home operator determining result is that the source IP address belongs to the preset IP address set, it is determined that the source IP address in the GTP-C message is valid.

The home operator determining result is a result obtained after the MME and/or the HSS determine/determines whether the IP address in the GTP-C message is in the preset IP address set.

Specifically, the preset IP address set may be pre-configured in the HSS or the MME.

Further, specifically, a list of roaming operators (peer PGW IP addresses or peer PLMN IDs) permitted by the operator to which the SGW belongs may be configured in the HSS or the MME; the SGW or the edge node sends the source IP address to the HSS or the MME; and then the HSS or the MME determines whether the source IP address is in the list to obtain a home operator determining result, and returns the home operator determining result to the SGW or the edge node. When the home operator determining result is that the source IP address does not belong to the preset IP address set, it is determined that the source IP address in the GTP-C message is invalid.

It may be understood that the attack prevention method is more flexible by determining, in different manners, whether the source IP address is valid.

It may be understood that, because the source IP address in the GTP-C message can reflect the operator of the peer PGW, whether the peer PGW is in the list of the permitted roaming operators may be determined by using the source IP address, so as to determine that the GTP-C message is invalid when the peer PGW is not in the list of the permitted roaming operators, that is, the GTP-C message may be from a hacker attack. In this case, to ensure communication security, the message is discarded, or further, the GTP-C response message carrying the error code may be sent to the PGW.

Optionally, whether the operator to which the PGW belongs is a roaming operator permitted by the SGW may be determined by using another parameter that can reflect a network code of the GTP-C message.

Further, optionally, an information list of permitted roaming operators may be pre-configured in the SGW or the edge node (GTP-c aware). The information list of the roaming operators includes an IP address of a peer PGW sending the GTP-C message and a public land mobile network ID (Public Land Mobile Network ID, PLMN ID for short) of the peer PGW. Then, whether the source IP address or the PLMN ID or both that are in the GTP-C message and that are of the PGW are in the information list of the roaming operators is checked. If the source IP address or the PLMN ID or both of the PGW belong to the information list of the roaming operators, it is determined that the operator to which the PGW belongs is an operator authorized by the SGW; or if the source IP address or the PLMN ID or both of the PGW do not belong to the information list of the roaming operators, it is determined that the operator to which the PGW belongs is not an operator authorized by the SGW, that is, the GTP-C message may be from a hacker attack. In this case, to ensure communication security, the message is discarded, or further, the GTP-C response message carrying the error code may be sent to the PGW.

Alternatively, specifically, an information list of permitted roaming operators may be pre-configured in the HSS and/or the MME. The information list of the roaming operators includes an IP address of a peer PGW sending the GTP-C message and a public land mobile network ID (Public Land Mobile Network ID, PLMN ID for short) of the peer PGW. Then, the SGW or the edge node (GTP-c aware) sends the source IP address and/or the PLMN ID of the peer PGW to the HSS and/or the MME. The HSS or the MME or both determine whether the source IP address or the PLMN ID or both are in the information list of the roaming operators to obtain a home operator determining result, and return the result to the SGW or the edge node. If the source IP address or the PLMN ID or both of the PGW are in the information list of the roaming operators, it is determined that the operator to which the PGW belongs is an operator authorized by the SGW; or if the source IP address or the PLMN ID or both of the PGW do not belong to the information list of the roaming operators, it is determined that the operator to which the PGW belongs is not an operator authorized by the SGW, that is, the GTP-C message may be from a hacker attack. In this case, to ensure communication security, the message is discarded, or further, the GTP-C response message carrying the error code may be sent to the PGW.

It may be understood that, because the IP address and/or the PLMN ID of the PGW can reflect the operator to which the PGW belongs, whether the operator to which the PGW belongs is a roaming operator permitted by the SGW may be determined by using the IP address and/or the PLMN ID of the PGW, so as to further determine whether the message is valid.

Optionally, in an embodiment of the present invention, the characteristic parameter includes the source Internet Protocol (IP) address in the GTP-C message.

The determining whether a characteristic parameter of the GTP-C message is valid further includes:
determining whether the source IP address is consistent with a source IP address in a GTP-C message received by the SGW or the edge node before the GTP-C message is received; and
when the source IP address is inconsistent with the source IP address in the GTP-C message received by the SGW or the edge node before the GTP-C message is received, determining that the source IP address in the GTP-C message is invalid.

Preferably, the determining whether the source IP address is consistent with a source IP address in a GTP-C message received by the SGW or the edge node before the GTP-C message is received includes:
determining whether the source IP address is consistent with the source IP address in a create session response message in the GTP-C message received by the SGW or the edge node before the GTP-C message is received.

Specifically, optionally, the SGW detects whether the PGW IP address (an IP address parameter of an s5s8-pgw-gtpu-interface of an s5s8-u-pgw-f-teid, or a source IP address parameter of an IP address layer) in the message is consistent with the PGW IP address (an IP address parameter of an s5s8-pgw-gtpu-interface of an s5s8-u-pgw-f-teid, or a source IP address parameter of an IP address layer) in the create session response message previously received from the PGW, and determines that the GTP-C message is valid when the PGW IP address is consistent with the PGW IP address in the create session response message previously received from the PGW. In this case, normal service processing may be continued. When the PGW IP address is inconsistent with the PGW IP address in the create session response message previously received from the PGW, it is determined that the GTP-C message is invalid, that is, the GTP-C message may be from a hacker attack. In this case, to ensure communication security, the message is discarded, or further, the GTP-C response message carrying the error code may be sent to the PGW.

Optionally, validity of the GTP-C message may be further determined by determining whether the source IP address or the PLMN ID or both are consistent with a source IP address or a PLMN ID or both in the GTP-C message received by the SGW or the edge node before the GTP-C message is received.

It may be understood that, IP addresses in GTP-C messages sent by a same PGW are consistent. Therefore, by further determining whether the PGW IP address in the currently received GTP-C message is consistent with the PGW IP address in the GTP-C message previously received from the PGW, validity of the GTP-C message can be further ensured, and communication security is ensured.

Optionally, in an embodiment of the present invention, the characteristic parameter includes the international mobile subscriber identity (IMSI) of the user.

The determining whether a characteristic parameter of the GTP-C message is valid includes:
determining whether the IMSI is an IMSI authorized by an operator to which the PGW belongs; and
when the IMSI is not the IMSI authorized by the operator to which the PGW belongs, determining that the IMSI in the GTP-C message is invalid.

Optionally, when the IMSI is the IMSI authorized by the operator to which the PGW belongs, it is determined that the GTP-C message is valid.

The IMSI is an identity used to uniquely identify a terminal user that sends the GTP-C message by using the PGW.

Specifically, because the GTP-C message directly carries the IMSI, or carries a TEID, the IMSI is carried in the GTP-C message or is obtained by using the tunnel endpoint identifier (Tunnel endpoint identification, TEID for short) carried in the GTP-C message.

Optionally, the GTP-C message may include another identity used to uniquely identify the terminal user that sends the GTP-C message by using the PGW.

Specifically, the SGW or the edge node checks whether a mobile country code (Mobile Country Code, MCC for short) or a mobile network code (Mobile Network Code, MNC for short) or both in the IMSI are consistent with an MCC and/or an MNC to which the SGW belongs, so as to determine whether the IMSI is valid.

Further, specifically, a list of MCCs and/or MNCs to which the PGW belong/belongs may be pre-configured in the SGW or the edge node, and then whether the MCC or the MNC or both in the IMSI in the GTP-C message are in the list is checked, to determine whether the IMSI is valid.

Mobile country code MCC resources are centrally allocated and managed by the International Telecommunication Union (ITU). A mobile country code uniquely identifies a country to which a mobile subscriber belongs, and includes three digits, which are 460 for China. A mobile network code MNC is used to identify a mobile network to which a mobile client belongs. For example, MNCs of China Mobile are 00, 02, 04, and 07, MNCs of China Unicom are 01 and 06, and MNCs of China Telecom are 03 and 05.

It may be understood that, because the IMSI is the identity of the terminal user that sends the GTP-C message by using the PGW, that is, a message resource that sends the GTP-C message, whether the GTP-C is sent by a valid terminal user can be accurately determined by using the IMSI in the GTP-C message to determine validity of the GTP-C message, so as to prevent a hacker from launching a malicious attack by using GTP-C signaling, and improve communication security.

It should be noted that, the embodiment of the present invention includes: determining 1: determining whether the source IP address in the GTP-C message is valid, to determine whether the peer PGW is in the list of the roaming operators permitted by the operator to which the SGW belongs; determining 2: determining whether the source IP address in the GTP-C message is valid, to determine consistency of the GTP-C message; determining 3: determining whether the message type of the GTP-C message is valid; and determining 4: determining whether the IMSI in the GTP-C message is valid. Execution of the determining is not strictly limited, and all embodiments in which the foregoing determining steps are performed are optional embodiments of the present invention.

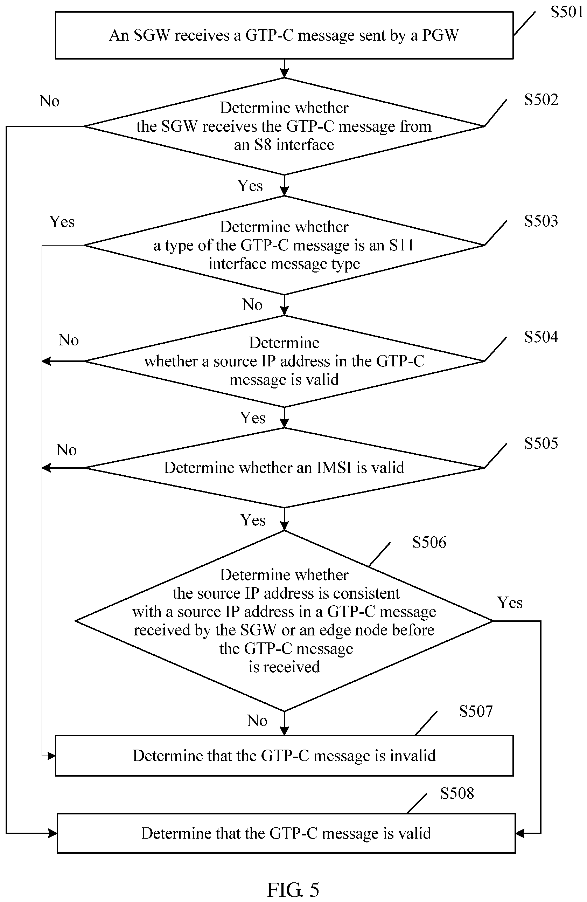

To better understand and implement the foregoing solutions in the embodiments of the present invention, the following further describes the embodiments of the present invention with reference to FIG. 5.

Referring to FIG. 5, FIG. 5 is a schematic flowchart of another signaling attack prevention method according to an embodiment of the present invention. In the method shown in FIG. 5, for content that is the same as or similar to that in the method shown in FIG. 4, refer to detailed descriptions in FIG. 4, and details are not described herein again. As shown in FIG. 5, the method may include the following steps.

S501. An SGW receives a GTP-C message sent by a PGW.

The GTP-C message includes a source IP address of the peer PGW, and an IMSI of a user sending the GTP-C message.

S502. Determine whether the SGW receives the GTP-C message from an S8 interface.

Optionally, if the SGW receives the GTP-C message from the S8 interface, in this case, step S508 is performed.

Optionally, if the SGW does not receive the GTP-C message from the S8 interface, in this case, step S503 is performed.

S503. Determine whether a type of the GTP-C message is an S11 interface message type.

Optionally, if the type of the GTP-C message is the S11 interface message type, in this case, step S507 is performed.

Optionally, if the type of the GTP-C message is not the S11 interface message type, in this case, step S504 is performed.

S504. Determine whether a source IP address in the GTP-C message is valid, to determine whether the peer PGW is in a list of roaming operators permitted by an operator to which the SGW belongs.

Optionally, if the source IP address in the GTP-C message is valid, in this case, step S505 is performed.

Optionally, if the source IP address in the GTP-C message is invalid, in this case, step S507 is performed.

S505. Determine whether an IMSI is valid.

Optionally, if the IMSI is an IMSI authorized by the PGW, in this case, step S506 is performed.

Optionally, if the IMSI is not an IMSI authorized by the PGW, in this case, step S507 is performed.

S506. Determine whether the source IP address is consistent with a source IP address in a GTP-C message received by the SGW or an edge node before the GTP-C message is received.

Optionally, if the source IP address is consistent with the source IP address in the GTP-C message received by the SGW or the edge node before the GTP-C message is received, in this case, step S508 is performed.

Optionally, if the source IP address is inconsistent with the source IP address in the GTP-C message received by the SGW or the edge node before the GTP-C message is received, in this case, step S507 is performed.

S507. Determine that the GTP-C message is invalid.

In this embodiment of the present invention, in this case, the SGW or the edge node (GTP-c aware) discards the GTP-C message or returns a GTP-C response message carrying an error code.

S508. Determine that the GTP-C message is valid.

In this embodiment of the present invention, in this case, the SGW or the edge node (GTP-c aware) continues normal service processing.

It should be noted that, the foregoing steps S503, S504, S505, and S506 are optional steps; a sequence between step S503 and step S504 may be exchanged, that is, step S504 may be performed before step S503 is performed; and a sequence between step S502 and step S503 may be exchanged, that is, step S503 may be performed before step S502 is performed.

It can be learned that, in the solution in this embodiment, after the SGW or the edge node receives the GTP-C message sent by the PGW, whether the characteristic parameter carried in the GTP-C message is valid is determined when the GTP-C message is received from the S8 interface, and the GTP-C message is discarded or the GTP-C response message carrying the error code cause value is returned to the PGW when the characteristic parameter is invalid, so that a hacker can be effectively prevented from attacking the SGW by using each attack path, and communication security is improved.

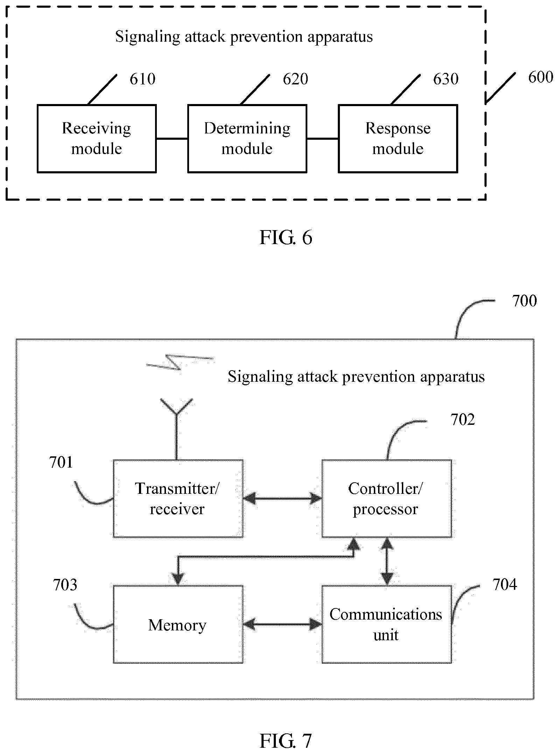

Referring to FIG. 6, FIG. 6 is a schematic structural diagram of a signaling attack prevention apparatus according to an embodiment of the present invention. The signaling attack prevention apparatus is configured to implement the signaling attack prevention method disclosed in the embodiments of the present invention. As shown in FIG. 6, the signaling attack prevention apparatus 600 provided in this embodiment of the present invention may include:
a receiving module 610, a determining module 620, and a response module 630.

The receiving module 610 is configured to receive a general packet radio service (GPRS) Tunneling Protocol (GTP-C) message sent by a public data network gateway (PGW).

Specifically, the signaling attack prevention apparatus 600 may be an SGW or an edge node. That is, the GTP-C message sent by the PGW may be received by the SGW, or the GTP-C message sent by the PGW may be received by the edge node (GTP-C aware).

Optionally, the edge node may be a firewall that is deployed at a border of an operator network and that is aware of the GTP-C Protocol.

Specifically, in this embodiment of the present invention, the GTP-C message may be a create bearer request message, a delete session request message, a delete bearer request message, or the like.

Optionally, the GTP-C message may include at least one of the following items:
a source Internet Protocol (IP) address in the GTP-C message, an international mobile subscriber identity (IMSI) of a user, or a message type of the GTP-C message.

The determining module 620 is configured to determine whether the GTP-C message is received from an S8 interface.

Optionally, in an embodiment of the present invention, that the determining module 620 determines whether the GTP-C message is received from an S8 interface is specifically:
determining whether the source IP address and an IP address of the serving gateway (SGW) or the edge node that receives the GTP-C message belong to a same network segment; and
when the source IP address and the IP address of the SGW or the edge node that receives the GTP-C message do not belong to a same network segment, determining that an interface for receiving the GTP-C message is the S8 interface.

Optionally, in another embodiment of the present invention, that the determining module 620 determines whether the GTP-C message is received from an S8 interface is specifically:
determining whether the source IP address belongs to an IP address set authorized by an operator to which the SGW or the edge node belongs; and
when the source IP address does not belong to the IP address set authorized by the operator to which the SGW or the edge node belongs, determining that an interface for receiving the GTP-C message is the S8 interface.

Optionally, the IP address set may be stored in the signaling attack prevention apparatus 600.

Specifically, the IP address set may be stored in the SGW or the edge node.

The determining module 620 is further configured to: when the GTP-C message is received from the S8 interface, determine whether a characteristic parameter of the GTP-C message is valid.

The response module 630 is configured to: if the characteristic parameter of the GTP-C message is invalid, discard the GTP-C message or return, to the PGW, a GTP-C response message carrying an error code cause value.

Optionally, in an embodiment of the present invention, the characteristic parameter includes the message type of the GTP-C message.

That the determining module 620 determines whether the GTP-C message is received from an S8 interface is specifically:
determining whether the message type of the GTP-C message is an S11 interface message type; and
when the message type of the GTP-C message is the S11 interface message type, determining that the message type of the GTP-C message is invalid.

Optionally, in an embodiment of the present invention, the characteristic parameter includes the source Internet Protocol (IP) address in the GTP-C message.

That the determining module 620 determines whether a characteristic parameter of the GTP-C message is valid is specifically:
determining whether the source IP address belongs to a preset IP address set; and
when the IP address does not belong to the preset IP address set, determining that the source IP address in the GTP-C message is invalid.

Optionally, in an embodiment of the present invention, the characteristic parameter includes the source Internet Protocol (IP) address in the GTP-C message.

That the determining module 620 determines whether a characteristic parameter of the GTP-C message is valid is specifically:
sending the source IP address to a home subscriber server (HSS) and/or a mobility management entity (MME), so that the MME and/or the HSS determine/determines whether the source IP address belongs to the preset IP address set;
receiving a home operator determining result returned by the MME and/or the HSS; and
when the home operator determining result is that the source IP address does not belong to the preset IP address set, determining that the source IP address in the GTP-C message is invalid.

Optionally, in an embodiment of the present invention, the characteristic parameter includes the source Internet Protocol (IP) address in the GTP-C message.

That the determining module 620 determines whether a characteristic parameter of the GTP-C message is valid is specifically:
determining whether the source IP address is consistent with a source IP address in a GTP-C message received by the SGW or the edge node before the GTP-C message is received; and
when the source IP address is inconsistent with the source IP address in the GTP-C message received by the SGW or the edge node before the GTP-C message is received, determining that the source IP address in the GTP-C message is invalid.

Optionally, in an embodiment of the present invention, the characteristic parameter includes the international mobile subscriber identity (IMSI) of the user.

That the determining module 620 determines whether a characteristic parameter of the GTP-C message is valid is specifically:
determining whether the IMSI is an IMSI authorized by an operator to which the PGW belongs; and
when the IMSI is not the IMSI authorized by the operator to which the PGW belongs, determining that the IMSI in the GTP-C message is invalid.

It can be learned that, in the solution in this embodiment, after the signaling attack prevention apparatus 600 (which is specifically the SGW or the edge node) receives the GTP-C message sent by the PGW, whether the characteristic parameter carried in the GTP-C message is valid is determined when the GTP-C message is received from the S8 interface, and the GTP-C message is discarded or the GTP-C response message carrying the error code cause value is returned to the PGW when the characteristic parameter is invalid, so that a hacker can be effectively prevented from attacking the SGW by using each attack path, and communication security is improved.

In this embodiment, the signaling attack prevention apparatus 600 is presented in a form of a unit. The "unit" herein may refer to an application-specific integrated circuit (application-specific integrated circuit, ASIC), a processor and a memory that execute one or more software or firmware programs, an integrated logic circuit, and/or another component that can provide the foregoing functions.

It may be understood that functions of the function units of the signaling attack prevention apparatus 600 in this embodiment may be specifically implemented according to the methods in the foregoing method embodiments. For a specific implementation process, refer to related descriptions in the foregoing method embodiments, and details are not described herein.

Referring to FIG. 7, FIG. 7 is a schematic structural diagram of another signaling attack prevention apparatus according to an embodiment of the present invention. As shown in FIG. 7, the signaling attack prevention apparatus 700 includes:
a transmitter/receiver 701 and a processor 702. The processor 702 may also be a controller, and is indicated as a "controller/processor 702" in FIG. 7. The transmitter/receiver 701 is configured to: support the signaling attack prevention apparatus 700 (which may be specifically an SGW or an edge node) in sending/receiving information to/from the PGW in the foregoing embodiment, and support the SGW in performing radio communication with another device. The processor 702 executes various functions used to communicate with the signaling attack prevention apparatus 700. On an uplink, an uplink signal from the PGW is received by using an antenna, is demodulated (for example, a high frequency signal is demodulated into a baseband signal) by the receiver 701, and is then processed by the processor 702, to restore service data and signaling information sent to the signaling attack prevention apparatus 700. On a downlink, the service data and the signaling message are processed by the processor 702, and are modulated (for example, a baseband signal is modulated into a high frequency signal) by the transmitter 701, to generate a downlink signal, and the downlink signal is transmitted to the PGW by using the antenna. It should be noted that the foregoing demodulation or modulation function may be implemented by the processor 702. For example, the processor 702 is further configured to perform corresponding steps in the method embodiments, and/or another process in the technical solution described in this embodiment of the present invention.

Further, the signaling attack prevention apparatus 700 may further include a memory 703, and the memory 703 is configured to store program code and data of the signaling attack prevention apparatus 700. In addition, the signaling attack prevention apparatus 700 may further include a communications unit 704. The communications unit 704 is configured to support the signaling attack prevention apparatus in communicating with another network entity (for example, a network device in a core network). For example, in an LTE system, the communications unit 704 may be an S1-MME interface, and be configured to support the signaling attack prevention apparatus in communicating with a mobility management entity (Mobility Management Entity, MME).

It may be understood that, FIG. 7 shows merely a simplified design of the signaling attack prevention apparatus 700. In actual application, the signaling attack prevention apparatus 700 may include any quantities of transmitters, receivers, processors, controllers, memories, and communications units. All signaling attack prevention apparatuses that can implement the embodiments of the present invention fall within the protection scope of the embodiments of the present invention.

An embodiment of the present invention further provides a computer storage medium. The computer storage medium may store a program; and when the program is executed, some or all steps of any signaling attack prevention method in the foregoing method embodiments are performed.

It should be noted that, to make the description brief, the foregoing method embodiments are expressed as a series of actions. However, persons skilled in the art should appreciate that the present invention is not limited to the described action sequence, because according to the present invention, some steps may be performed in other sequences or performed simultaneously. In addition, persons skilled in the art should also appreciate that all the embodiments described in the specification are example embodiments, and the related actions and modules are not necessarily mandatory to the present invention.

In the foregoing embodiments, the description of each embodiment has respective focuses. For a part that is not described in detail in an embodiment, reference may be made to related descriptions in other embodiments.

In the several embodiments provided in the present invention, it should be understood that the disclosed apparatus may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, function units in the embodiments of the present invention may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a read-only memory (ROM, Read-Only Memory), a random access memory (RAM, Random Access Memory), a removable hard disk, a magnetic disk, or an optical disc.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A signaling attack prevention method, wherein the method comprises:
receiving (S401, S501) a general packet radio service, GPRS, Tunneling Protocol. GTP-C, message sent by a public data network gateway, PGW, wherein the GTP-C message comprises a characteristic parameter;
determining (S402, S502) whether the GTP-C message is received from an S8 interface;
when the GTP-C message is received from the S8 interface, determining (S403, S503, S506) whether the characteristic parameter of the GTP-C message is valid; and
if the characteristic parameter of the GTP-C message is invalid, discarding (S404) the GTP-C message or returning, to the PGW, a GTP-C response message carrying an error code cause value,
wherein the characteristic parameter comprises a message type of the GTP-C message; and the determining (S403, S503, S506) whether the characteristic parameter of the GTP-C message is valid comprises:
determining (S503) whether the message type of the GTP-C message is an S11 interface message type; and
when the message type of the GTP-C message is the S11 interface message type, determining that the message type of the GTP-C message is invalid.

2. The method according to claim 1, wherein the characteristic parameter comprises a source Internet Protocol, IP, address in the GTP-C message; and
the determining (S403, S503, S506) whether the characteristic parameter of the GTP-C message is valid comprises:
determining whether the source IP address belongs to a preset IP address set; and
when the source IP address does not belong to the preset IP address set, determining that the source IP address in the GTP-C message is invalid.

3. The method according to any one of claim 1 or claim 2, wherein the characteristic parameter comprises the source Internet Protocol, IP, address in the GTP-C message; and
the determining (S403, S503, S506) whether the characteristic parameter of the GTP-C message is valid comprises:
sending the source IP address to a home subscriber server, HSS, and/or a mobility management entity, MME, so that the MME and/or the HSS determine/determines whether the source IP address belongs to the preset IP address set;
receiving a home operator determining result returned by the MME and/or the HSS; and
when the home operator determining result is that the source IP address does not belong to the preset IP address set, determining that the source IP address in the GTP-C message is invalid.

4. The method according to any one of claims 1 to 3, wherein the characteristic parameter comprises the source Internet Protocol, IP, address in the GTP-C message; and
the determining (S403, S503, S506) whether the characteristic parameter of the GTP-C message is valid further comprises:
determining (S506) whether the source IP address is consistent with a source IP address in a GTP-C message received by an SGW or an edge node before the GTP-C message is received; and
when the source IP address is inconsistent with the source IP address in the GTP-C message received by the SGW or the edge node before the GTP-C message is received, determining that the source IP address in the GTP-C message is invalid.

5. The method according to any one of claims 1 to 4, wherein the characteristic parameter comprises the source Internet Protocol, IP, address in the GTP-C message, and the determining (S403, S503, S506) whether the GTP-C message is received from an S8 interface comprises:
determining whether the source IP address and an IP address of the serving gateway (SGW) or the edge node that receives the GTP-C message belong to a same network segment; and
when the source IP address and the IP address of the SGW or the edge node that receives the GTP-C message do not belong to a same network segment, determining that an interface for receiving the GTP-C message is the S8 interface.

6. The method according to any one of claims 1 to 4, wherein the characteristic parameter comprises the source Internet Protocol, IP, address in the GTP-C message, and the determining (S403, S503, S506) whether the GTP-C message is received from an S8 interface comprises:
determining whether the source IP address belongs to an IP address set authorized by an operator to which the SGW or the edge node belongs; and
when the source IP address does not belong to the IP address set authorized by the operator to which the SGW or the edge node belongs, determining that an interface for receiving the GTP-C message is the S8 interface.

7. The method according to any one of claims 1 to 6, wherein the characteristic parameter comprises an international mobile subscriber identity, IMSI, of a user; and
the determining (S403, S503, S506) whether the characteristic parameter of the GTP-C message is valid comprises:
determining whether the IMSI is an IMSI authorized by an operator to which the PGW belongs; and
when the IMSI is not the IMSI authorized by the operator to which the PGW belongs, determining that the IMSI in the GTP-C message is invalid.

8. A signaling attack prevention apparatus (600), wherein the apparatus comprises:
a receiving module (610), configured to receive a general packet radio service, GPRS, Tunneling Protocol, GTP-C, message sent by a public data network gateway, PGW, wherein the GTP-C message comprises a characteristic parameter;
a determining module (620), configured to determine whether the GTP-C message is received from an S8 interface, wherein
the determining module (620) is further configured to: when the GTP-C message is received from the S8 interface, determine whether the characteristic parameter of the GTP-C message is valid; and
a response module (630), configured to: if the characteristic parameter of the GTP-C message is invalid, discard the GTP-C message or return, to the PGW, a GTP-C response message carrying an error code cause value,
wherein the characteristic parameter comprises a message type of the GTP-C message; and that the determining module (620) determines whether the GTP-C message is received from an S8 interface is specifically:
determining whether the message type of the GTP-C message is an S11 interface message type; and
when the message type of the GTP-C message is the S11 interface message type, determining that the message type of the GTP-C message is invalid.

9. The apparatus according to claim 8, wherein the characteristic parameter comprises a source Internet Protocol, IP, address in the GTP-C message; and
that the determining module (620) determines whether the characteristic parameter of the GTP-C message is valid is specifically:
determining whether the source IP address belongs to a preset IP address set; and
when the source IP address does not belong to the preset IP address set, determining that the source IP address in the GTP-C message is invalid.

10. The apparatus according to any one of claim 8 or claim 9, wherein the characteristic parameter comprises the source Internet Protocol, IP, address in the GTP-C message; and
that the determining module (620) determines whether the characteristic parameter of the GTP-C message is valid is specifically:
sending the source IP address to a home subscriber server, HSS, and/or a mobility management entity, MME, so that the MME and/or the HSS determine/determines whether the source IP address belongs to the preset IP address set;
receiving a home operator determining result returned by the MME and/or the HSS; and
when the home operator determining result is that the source IP address does not belong to the preset IP address set, determining that the source IP address in the GTP-C message is invalid.

11. The apparatus according to any one of claims 8 to 10, wherein the characteristic parameter comprises the source Internet Protocol, IP, address in the GTP-C message; and
that the determining module (620) determines whether the characteristic parameter of the GTP-C message is valid is specifically:
determining whether the source IP address is consistent with a source IP address in a GTP-C message received by an SGW or an edge node before the GTP-C message is received; and
when the source IP address is inconsistent with the source IP address in the GTP-C message received by the SGW or the edge node before the GTP-C message is received, determining that the source IP address in the GTP-C message is invalid.

12. The apparatus according to any one of claims 8 to 11, wherein the characteristic parameter comprises the source Internet Protocol, IP, address in the GTP-C message, and that the determining module (620) determines whether the GTP-C message is received from an S8 interface is specifically:
determining whether the source IP address and an IP address of the serving gateway, SGW, or the edge node that receives the GTP-C message belong to a same network segment; and
when the source IP address and the IP address of the SGW or the edge node that receives the GTP-C message do not belong to a same network segment, determining that an interface for receiving the GTP-C message is the S8 interface.

13. The apparatus according to any one of claims 8 to 11, wherein the characteristic parameter comprises the source Internet Protocol, IP, address in the GTP-C message, and that the determining module (620) determines whether the GTP-C message is received from an S8 interface is specifically:
determining whether the source IP address belongs to an IP address set authorized by an operator to which the SGW or the edge node belongs; and
when the source IP address does not belong to the IP address set authorized by the operator to which the SGW or the edge node belongs, determining that an interface for receiving the GTP-C message is the S8 interface.

14. The apparatus according to any one of claims 8 to 13, wherein the characteristic parameter comprises an international mobile subscriber identity, IMSI, of a user; and
that the determining module (620) determines whether the characteristic parameter of the GTP-C message is valid is specifically:
determining whether the IMSI is an IMSI authorized by an operator to which the PGW belongs; and
when the IMSI is not the IMSI authorized by the operator to which the PGW belongs, determining that the IMSI in the GTP-C message is invalid.

## Patentansprüche

1. Verfahren zur Verhinderung von Signalangriffen, das Verfahren Folgendes umfassend:
Empfangen (S401, S501) einer allgemeinen Paketfunkdienst-, GPRS-Tunneling-Protokoll-Nachricht, GTP-C-Nachricht, die von einem öffentlichen Datennetzwerk-Gateway, PGW, gesendet wird, wobei die GTP-C-Nachricht einen charakteristischen Parameter umfasst; Bestimmen (S402, S502), ob die GTP-C-Nachricht von einer S8-Schnittstelle empfangen wird;
wenn die GTP-C-Nachricht von der S8-Schnittstelle empfangen wird, Bestimmen (S403, S503, S506), ob der charakteristische Parameter der GTP-C-Nachricht gültig ist; und
wenn der charakteristische Parameter der GTP-C-Nachricht ungültig ist, Verwerfen (S404) der GTP-C-Nachricht oder Zurückgeben, an das PGW, einer GTP-C-Antwortnachricht, die einen Fehlercode-Ursachenwert enthält, wobei der charakteristische Parameter einen Nachrichtentyp der GTP-C-Nachricht umfasst; und
wobei das Bestimmen (S403, S503, S506), ob der charakteristische Parameter der GTP-C-Nachricht gültig ist, Folgendes umfasst:
Bestimmen (S503), ob der Nachrichtentyp der GTP-C-Nachricht ein S11-Schnittstellen-Nachrichtentyp ist; und
wenn der Nachrichtentyp der GTP-C-Nachricht der Nachrichtentyp der S11-Schnittstelle ist, Bestimmen, dass der Nachrichtentyp der GTP-C-Nachricht ungültig ist.

2. Verfahren nach Anspruch 1, wobei der charakteristische Parameter eine Quell-Internetprotokoll-, IP-Adresse in der GTP-C-Nachricht umfasst; und
wobei das Bestimmen (S403, S503, S506), ob der charakteristische Parameter der GTP-C-Nachricht gültig ist, Folgendes umfasst:
Bestimmen, ob die Quell-IP-Adresse zu einem voreingestellten IP-Adressensatz gehört; und
wenn die Quell-IP-Adresse nicht zu der voreingestellten IP-Adresse gehört, Bestimmen, dass die Quell-IP-Adresse in der GTP-C-Nachricht ungültig ist.

3. Verfahren nach einem der Ansprüche 1 oder 2, wobei der charakteristische Parameter die Quell-Internetprotokoll-, IP-Adresse in der GTP-C-Nachricht umfasst; und
wobei das Bestimmen (S403, S503, S506), ob der charakteristische Parameter der GTP-C-Nachricht gültig ist, Folgendes umfasst:
Senden der Quell-IP-Adresse an einen Home Subscriber Server (HSS) und/oder eine Mobilitätsverwaltungseinheit (MME), so dass die MME und/oder die HSS feststellt/bestimmt, ob die Quell-IP-Adresse zu der voreingestellten IP-Adresse gehört;
Empfangen eines Heimbetreiber-Bestimmungsergebnisses, das durch die MME und/oder die HSS zurückgegeben wird; und
wenn das Heimbetreiber-Bestimmungsergebnis darin besteht, dass die Quell-IP-Adresse nicht zu der eingestellten voreingestellten IP-Adresse gehört, Bestimmen, dass die Quell-IP-Adresse in der GTP-C-Nachricht ungültig ist.

4. Verfahren nach einem der Ansprüche 1 bis 3, wobei der charakteristische Parameter die Quell-Internetprotokoll-, IP-Adresse in der GTP-C-Nachricht umfasst; und
wobei das Bestimmen (S403, S503, S506), ob der charakteristische Parameter der GTP-C-Nachricht gültig ist, ferner Folgendes umfasst:
Bestimmen (S506), ob die Quell-IP-Adresse mit einer Quell-IP-Adresse in einer GTP-C-Nachricht übereinstimmt, die von einem SGW oder einem Edge-Knoten empfangen wird, bevor die GTP-C-Nachricht empfangen wird; und
wenn die Quell-IP-Adresse nicht mit der Quell-IP-Adresse in der GTP-C-Nachricht übereinstimmt, die vom SGW oder dem Edge-Knoten vor dem Empfang der GTP-C-Nachricht empfangen wurde, Bestimmen, dass die Quell-IP-Adresse in der GTP-C-Nachricht ungültig ist.

5. Verfahren nach einem der Ansprüche 1 bis 4, wobei der charakteristische Parameter die Quell-Internetprotokoll-, IP-Adresse in der GTP-C-Nachricht umfasst, und wobei das Bestimmen (S403, S503, S506), ob die GTP-C-Nachricht von einer S8-Schnittstelle empfangen wird, Folgendes umfasst:
Bestimmen, ob die Quell-IP-Adresse und eine IP-Adresse des Serving-Gateways (SGW) oder des Edge-Knotens, der die GTP-C-Nachricht empfängt, zu einem gleichen Netzwerksegment gehören; und
wenn die Quell-IP-Adresse und die IP-Adresse des SGW oder des Edge-Knotens, der die GTP-C-Nachricht empfängt, nicht zu demselben Netzsegment gehören, Bestimmen, dass eine Schnittstelle für den Empfang der GTP-C-Nachricht die S8-Schnittstelle ist.

6. Verfahren nach einem der Ansprüche 1 bis 4, wobei der charakteristische Parameter die Quell-Internetprotokoll-, IP-Adresse in der GTP-C-Nachricht umfasst, und wobei das Bestimmen (S403, S503, S506), ob die GTP-C-Nachricht von einer S8-Schnittstelle empfangen wird, Folgendes umfasst:
Bestimmen, ob die Quell-IP-Adresse zu einer IP-Adresse gehört, die von einem Betreiber autorisiert wurde, zu dem das SGW oder der Edge-Knoten gehört; und
wenn die Quell-IP-Adresse nicht zur IP-Adresse gehört, die von dem Betreiber, zu dem das SGW oder der Edge-Knoten gehört, autorisiert wurde, Bestimmen, dass eine Schnittstelle für den Empfang der GTP-C-Nachricht die S8-Schnittstelle ist.

7. Verfahren nach einem der Ansprüche 1 bis 6, wobei der charakteristische Parameter eine internationale Mobilfunk-Teilnehmeridentität, IMSI, eines Benutzers umfasst; und
wobei das Bestimmen (S403, S503, S506), ob der charakteristische Parameter der GTP-C-Nachricht gültig ist, Folgendes umfasst:
Bestimmen, ob die IMSI eine IMSI ist, die von einem Betreiber autorisiert wurde, zu dem das PGW gehört; und
wenn die IMSI nicht die IMSI ist, die von dem Betreiber, zu dem das PGW gehört, autorisiert wurde, Bestimmen, dass die IMSI in der GTP-C-Nachricht ungültig ist.

8. Vorrichtung zur Verhinderung von Signalangriffen (600), wobei die Vorrichtung Folgendes umfasst:
ein Empfangsmodul (610), das dafür konfiguriert ist, eine allgemeine Paketfunkdienst-, GPRS-Tunneling Protocol-, GTP-C-Nachricht zu empfangen, die von einem öffentlichen Datennetzgateway, PGW, gesendet wird, wobei die GTP-C-Nachricht einen charakteristischen Parameter umfasst;
ein Bestimmungsmodul (620), das dafür konfiguriert ist, zu bestimmen, ob die GTP-C-Nachricht von einer S8-Schnittstelle empfangen wird, wobei das Bestimmungsmodul (620) ferner für Folgendes konfiguriert ist:
wenn die GTP-C-Nachricht von der S8-Schnittstelle empfangen wird, Bestimmen, ob der charakteristische Parameter der GTP-C-Nachricht gültig ist; und
ein Antwortmodul (630), das für Folgendes konfiguriert ist:
wenn der charakteristische Parameter der GTP-C-Nachricht ungültig ist, Verwerfen der GTP-C-Nachricht oder Zurückgeben, an das PGW, einer GTP-C-Antwortnachricht, die einen Fehlercode-Ursachenwert enthält, wobei der charakteristische Parameter einen Nachrichtentyp der GTP-C-Nachricht umfasst; und
dass das Bestimmungsmodul (620) bestimmt, ob die GTP-C-Nachricht von einer S8-Schnittstelle empfangen wird, insbesondere:
Bestimmen, ob der Nachrichtentyp der GTP-C-Nachricht ein S11-Schnittstellen-Nachrichtentyp ist; und
wenn der Nachrichtentyp der GTP-C-Nachricht der Nachrichtentyp der S11-Schnittstelle ist, Bestimmen, dass der Nachrichtentyp der GTP-C-Nachricht ungültig ist.

9. Vorrichtung nach Anspruch 8, wobei der charakteristische Parameter eine Quell-Internetprotokoll-, IP-Adresse in der GTP-C-Nachricht umfasst; und
dass das Bestimmungsmodul (620) bestimmt, ob der charakteristische Parameter der GTP-C-Meldung gültig ist, insbesondere:
Bestimmen, ob die Quell-IP-Adresse zu einem voreingestellten IP-Adressensatz gehört; und
wenn die Quell-IP-Adresse nicht zu der voreingestellten IP-Adresse gehört, Bestimmen, dass die Quell-IP-Adresse in der GTP-C-Nachricht ungültig ist.

10. Vorrichtung nach einem der Ansprüche 8 oder 9, wobei der charakteristische Parameter die Quell-Internetprotokoll-, IP-Adresse in der GTP-C-Nachricht umfasst; und
dass das Bestimmungsmodul (620) bestimmt, ob der charakteristische Parameter der GTP-C-Meldung gültig ist, insbesondere:
Senden der Quell-IP-Adresse an einen Home Subscriber Server (HSS) und/oder eine Mobilitätsverwaltungseinheit (MME), so dass die MME und/oder die HSS feststellt/bestimmt, ob die Quell-IP-Adresse zu der voreingestellten IP-Adresse gehört;
Empfangen eines Heimbetreiber-Bestimmungsergebnisses, das durch die MME und/oder die HSS zurückgegeben wird; und
wenn das Heimbetreiber-Bestimmungsergebnis darin besteht, dass die Quell-IP-Adresse nicht zu der eingestellten voreingestellten IP-Adresse gehört, Bestimmen, dass die Quell-IP-Adresse in der GTP-C-Nachricht ungültig ist.

11. Vorrichtung nach einem der Ansprüche 8 bis 10, wobei der charakteristische Parameter die Quell-Internetprotokoll-, IP-Adresse in der GTP-C-Nachricht umfasst; und
dass das Bestimmungsmodul (620) bestimmt, ob der charakteristische Parameter der GTP-C-Meldung gültig ist, insbesondere:
Bestimmen, ob die Quell-IP-Adresse mit einer Quell-IP-Adresse in einer GTP-C-Nachricht übereinstimmt, die von einem SGW oder einem Edge-Knoten empfangen wird, bevor die GTP-C-Nachricht empfangen wird; und
wenn die Quell-IP-Adresse nicht mit der Quell-IP-Adresse in der GTP-C-Nachricht übereinstimmt, die vom SGW oder dem Edge-Knoten vor dem Empfang der GTP-C-Nachricht empfangen wurde, Bestimmen, dass die Quell-IP-Adresse in der GTP-C-Nachricht ungültig ist.

12. Vorrichtung nach einem der Ansprüche 8 bis 11, wobei der charakteristische Parameter die Quell-Internetprotokoll-, IP-Adresse in der GTP-C-Nachricht umfasst, und dass das Bestimmungsmodul (620) bestimmt, ob die GTP-C-Nachricht von einer S8-Schnittstelle empfangen wird, insbesondere:
Bestimmen, ob die Quell-IP-Adresse und eine IP-Adresse des Serving-Gateways, SGW, oder des Edge-Knotens, der die GTP-C-Nachricht empfängt, zu einem gleichen Netzwerksegment gehören; und
wenn die Quell-IP-Adresse und die IP-Adresse des SGW oder des Edge-Knotens, der die GTP-C-Nachricht empfängt, nicht zu demselben Netzsegment gehören, Bestimmen, dass eine Schnittstelle für den Empfang der GTP-C-Nachricht die S8-Schnittstelle ist.

13. Vorrichtung nach einem der Ansprüche 8 bis 11, wobei der charakteristische Parameter die Quell-Internetprotokoll-, IP-Adresse in der GTP-C-Nachricht umfasst, und dass das Bestimmungsmodul (620) bestimmt, ob die GTP-C-Nachricht von einer S8-Schnittstelle empfangen wird, insbesondere:
Bestimmen, ob die Quell-IP-Adresse zu einer IP-Adresse gehört, die von einem Betreiber autorisiert wurde, zu dem das SGW oder der Edge-Knoten gehört; und
wenn die Quell-IP-Adresse nicht zur IP-Adresse gehört, die von dem Betreiber, zu dem das SGW oder der Edge-Knoten gehört, autorisiert wurde, Bestimmen, dass eine Schnittstelle für den Empfang der GTP-C-Nachricht die S8-Schnittstelle ist.

14. Vorrichtung nach einem der Ansprüche 8 bis 13, wobei der charakteristische Parameter eine internationale Mobilfunk-Teilnehmeridentität, IMSI, eines Benutzers umfasst; und dass das Bestimmungsmodul (620) bestimmt, ob der charakteristische Parameter der GTP-C-Meldung gültig ist, insbesondere:
Bestimmen, ob die IMSI eine IMSI ist, die von einem Betreiber autorisiert wurde, zu dem das PGW gehört; und
wenn die IMSI nicht die IMSI ist, die von dem Betreiber, zu dem das PGW gehört, autorisiert wurde, Bestimmen, dass die IMSI in der GTP-C-Nachricht ungültig ist.

## Revendications

1. Procédé de prévention d'attaque de signalisation, dans lequel le procédé comprend :
la réception (S401, S501) d'un message de protocole de tunnellisation de service général de paquets radio, GPRS,GTP-C, envoyé par une passerelle de réseau public de données, PGW, le message GTP-C comprenant un paramètre caractéristique ;
le fait de déterminer (S402, S502) si le message GTP-C est reçu à partir d'une interface S8 ;
lorsque le message GTP-C est reçu à partir de l'interface S8, le fait de déterminer (S403, S503, S506) si le paramètre caractéristique du message GTP-C est valide ; et
si le paramètre caractéristique du message GTP-C n'est pas valide, le rejet (S404) du message GTP-C ou le renvoi, à la PGW, d'un message de réponse GTP-C portant une valeur de cause de code d'erreur,
dans lequel le paramètre caractéristique comprend un type de message du message GTP-C ; et le fait de déterminer (S403, S503, S506) si le paramètre caractéristique du message GTP-C est valide comprend :
le fait de déterminer (S503) si le type de message du message GTP-C est un type de message d'interface S11 ; et
lorsque le type de message du message GTP-C est le type de message d'interface S11, le fait de déterminer si le type de message du message GTP-C n'est pas valide.

2. Procédé selon la revendication 1, dans lequel le paramètre caractéristique comprend une adresse de protocole Internet, IP, source, dans le message GTP-C ; et
le fait de déterminer (S403, S503, S506) si le paramètre caractéristique du message GTP-C est valide comprend :
le fait de déterminer si l'adresse IP source appartient à un ensemble d'adresses IP prédéfinies ; et
lorsque l'adresse IP source n'appartient pas à l'ensemble d'adresses IP prédéfinies, le fait de déterminer si l'adresse IP source dans le message GTP-C n'est pas valide.

3. Procédé selon l'une quelconque des revendications 1 ou 2, dans lequel le paramètre caractéristique comprend l'adresse de protocole Internet, IP, source dans le message GTP-C ; et
le fait de déterminer (S403, S503, S506) si le paramètre caractéristique du message GTP-C est valide comprend :
l'envoi de l'adresse IP source à un serveur d'abonné domestique, HSS, et/ou une entité de gestion de mobilité MME, de telle sorte que la MME et/ou le HSS déterminent/détermine si l'adresse IP source appartient à l'ensemble d'adresses IP prédéfinies ;
la réception du résultat de détermination d'opérateur domestique renvoyé par la MME et/ou le HSS ; et
lorsque le résultat de détermination d'opérateur domestique est que l'adresse IP source n'appartient pas à l'ensemble d'adresses IP prédéfinies, le fait de déterminer si l'adresse IP source dans le message GTP-C n'est pas valide.

4. Procédé selon l'une quelconque des revendications 1 à 3, dans lequel le paramètre caractéristique comprend l'adresse de protocole Internet, IP, source dans le message GTP-C ; et
le fait de déterminer (S403, S503, S506) si le paramètre caractéristique du message GTP-C est valide comprend en outre :
le fait de déterminer (S506) si l'adresse IP source est cohérente avec une adresse IP source dans un message GTP-C reçu par une SGW ou un nœud périphérique avant la réception du message GTP-C ; et
lorsque l'adresse IP source n'est pas cohérente avec l'adresse IP source dans le message GTP-C reçu par la SGW ou le nœud périphérique avant la réception du message GTP-C, le fait de déterminer si l'adresse IP source dans le message GTP-C n'est pas valide.

5. Procédé selon l'une quelconque des revendications 1 à 4, dans lequel le paramètre caractéristique comprend l'adresse de protocole Internet, IP, source dans le message GTP-C et le fait de déterminer (S403, S503, S506) si le message GTP-C est reçu à partir d'une interface S8 comprend :
le fait de déterminer si l'adresse IP source et une adresse IP de la passerelle de desserte (SGW) ou du nœud périphérique qui reçoit le message GTP-C appartiennent à un même segment de réseau ; et
lorsque l'adresse IP source et l'adresse IP de la SGW ou du nœud périphérique qui reçoit le message GTP-C n'appartiennent pas à un même segment de réseau, le fait de déterminer qu'une interface destinée à recevoir le message GTP-C est l'interface S8.

6. Procédé selon l'une quelconque des revendications 1 à 4, dans lequel le paramètre caractéristique comprend l'adresse de protocole Internet, IP, source, l'adresse dans le message GTP-C et le fait de déterminer (S403, S503, S506) si le message GTP-C est reçu à partir d'une interface S8 comprend :
le fait de déterminer si l'adresse IP source appartient à un ensemble d'adresses IP autorisé par un opérateur auquel appartient la SGW ou le nœud périphérique ; et
lorsque l'adresse IP source n'appartient pas à l'ensemble d'adresses IP autorisé par l'opérateur auquel appartient la SGW ou le nœud périphérique, le fait de déterminer qu'une interface destinée à recevoir le message GTP-C est l'interface S8.

7. Procédé selon l'une quelconque des revendications 1 à 6, dans lequel le paramètre caractéristique comprend une identité internationale d'abonné mobile, IMSI, d'un utilisateur ; et
le fait de déterminer (S403, S503, S506) si le paramètre caractéristique du message GTP-C est valide comprend :
le fait de déterminer si l'IMSI est une IMSI autorisée par un opérateur auquel appartient la PGW ; et
lorsque l'IMSI n'est pas l'IMSI autorisée par l'opérateur auquel appartient la PGW, le fait de déterminer si l'IMSI dans le message GTP-C n'est pas valide.

8. Appareil de prévention d'attaque de signalisation (600), dans lequel l'appareil comprend :
un module de réception (610), configuré pour recevoir un message de protocole de tunnellisation de service général de paquets radio, GPRS, GTP-C, envoyé par une passerelle de réseau public de données, PGW, le message GTP-C comprenant un paramètre caractéristique ;
un module de détermination (620), configuré pour déterminer si le message GTP-C est reçu à partir d'une interface S8, le module de détermination (620) étant en outre configuré pour :
lorsque le message GTP-C est reçu à partir de l'interface S8, déterminer si le paramètre caractéristique du message GTP-C est valide ; et
un module de réponse (630), configuré pour : si le paramètre caractéristique du message GTP-C n'est pas valide, rejeter le message GTP-C ou renvoyer à la PGW un message de réponse GTP-C portant une valeur de cause de code d'erreur,
dans lequel le paramètre caractéristique comprend un type de message du message GTP-C ; et la réalisation de la détermination, par le module de détermination (620), du fait de savoir si le message GTP-C est reçu d'une interface S8 porte spécifiquement sur :
le fait de déterminer si le type de message du message GTP-C est un type de message d'interface S11 ; et
lorsque le type de message du message GTP-C est le type de message d'interface S11, le fait de déterminer si le type de message du message GTP-C n'est pas valide.

9. Appareil selon la revendication 8, dans lequel le paramètre caractéristique comprend une adresse de protocole Internet, IP, source, dans le message GTP-C ; et
la réalisation de la détermination, par le module de détermination (620), du fait de savoir si le paramètre caractéristique du message GTP-C est valide porte spécifiquement sur :
le fait de déterminer si l'adresse IP source appartient à un ensemble d'adresses IP prédéfinies ; et
lorsque l'adresse IP source n'appartient pas à l'ensemble d'adresses IP prédéfinies, le fait de déterminer si l'adresse IP source dans le message GTP-C n'est pas valide.

10. Appareil selon l'une quelconque des revendications 8 ou 9, dans lequel le paramètre caractéristique comprend l'adresse de protocole Internet, IP, source dans le message GTP-C ; et
la réalisation de la détermination, par le module de détermination (620), du fait de savoir si le paramètre caractéristique du message GTP-C est valide porte spécifiquement sur :
l'envoi de l'adresse IP source à un serveur d'abonné domestique, HSS, et/ou une entité de gestion de mobilité MME, de telle sorte que la MME et/ou le HSS déterminent/détermine si l'adresse IP source appartient à l'ensemble d'adresses IP prédéfinies ;
la réception du résultat de détermination d'opérateur domestique renvoyé par la MME et/ou le HSS ; et
lorsque le résultat de détermination d'opérateur domestique est que l'adresse IP source n'appartient pas à l'ensemble d'adresses IP prédéfinies, le fait de déterminer si l'adresse IP source dans le message GTP-C n'est pas valide.

11. Appareil selon l'une quelconque des revendications 8 à 10, dans lequel le paramètre caractéristique comprend l'adresse de protocole Internet, IP, source dans le message GTP-C ; et
la réalisation de la détermination, par le module de détermination (620), du fait de savoir si le paramètre caractéristique du message GTP-C est valide porte spécifiquement sur :
le fait de déterminer si l'adresse IP source est cohérente avec une adresse IP source dans un message GTP-C reçu par une SGW ou un nœud périphérique avant la réception du message GTP-C ; et
lorsque l'adresse IP source n'est pas cohérente avec l'adresse IP source dans le message GTP-C reçu par la SGW ou le nœud périphérique avant la réception du message GTP-C, le fait de déterminer si l'adresse IP source dans le message GTP-C n'est pas valide.

12. Appareil selon l'une quelconque des revendications 8 à 11, dans lequel le paramètre caractéristique comprend l'adresse de protocole Internet, IP, source dans le message GTP-C, et la réalisation de la détermination, par le module de détermination (620), du fait de savoir si le message GTP-C est reçu d'une interface S8 porte spécifiquement sur :
le fait de déterminer si l'adresse IP source et une adresse IP de la passerelle de desserte SGW ou du nœud périphérique qui reçoit le message GTP-C appartiennent à un même segment de réseau ; et
lorsque l'adresse IP source et l'adresse IP de la SGW ou du nœud périphérique qui reçoit le message GTP-C n'appartiennent pas à un même segment de réseau, le fait de déterminer qu'une interface destinée à recevoir le message GTP-C est l'interface S8.

13. Appareil selon l'une quelconque des revendications 8 à 11, dans lequel le paramètre caractéristique comprend l'adresse de protocole Internet, IP, source dans le message GTP-C, et la réalisation de la détermination, par le module de détermination (620), du fait de savoir si le message GTP-C est reçu d'une interface S8 porte spécifiquement sur :
le fait de déterminer si l'adresse IP source appartient à un ensemble d'adresses IP autorisé par un opérateur auquel appartient la SGW ou le nœud périphérique ; et lorsque l'adresse IP source n'appartient pas à l'ensemble d'adresses IP autorisé par l'opérateur auquel appartient la SGW ou le nœud périphérique, le fait de déterminer qu'une interface destinée à recevoir le message GTP-C est l'interface S8.

14. Appareil selon l'une quelconque des revendications 8 à 13, dans lequel le paramètre caractéristique comprend une identité internationale d'abonné mobile, IMSI, d'un utilisateur ; et
la réalisation de la détermination, par le module de détermination (620), du fait de savoir si le paramètre caractéristique du message GTP-C est valide porte spécifiquement sur :
le fait de déterminer si l'IMSI est une IMSI autorisée par un opérateur auquel appartient la PGW ; et
lorsque l'IMSI n'est pas l'IMSI autorisée par l'opérateur auquel appartient la PGW, le fait de déterminer si l'IMSI dans le message GTP-C n'est pas valide.
